# EUROPEAN PATENT APPLICATION

(11) **EP 4 507 352 A1**
(43) Date of publication of application: **12.02.2025**
(21) Application number: 24176154.3
(22) Date of filing: 16.05.2024
(51) Int. Cl.: H04W 12/041, H04W 12/0431

(54) **KEY PROVISION**

(30) Priority: 10.08.2023 IN 202341053590
(71) Applicant: Nokia Technologies Oy, 02610 Espoo (FI)
(72) Inventor: KARABULUT, Umur, Munich (DE); SELVAGANAPATHY, Srinivasan, Bangalore (IN); P NAIR, Suresh, Estero, FL (US); ORKOPOULOS, Stawros, Nersingen (DE); SPAPIS, Panagiotis, Munich (DE); GÜRSU, Halit Murat, Munich (DE)
(74) Representative: Cohausz & Florack

(57) **Abstract**

Methods, apparatus and systems for provision of keys in a communication network are disclosed.

## Description

### FIELD

The following disclosure relates to the field of communication technology, in particular communication networks, in particular wireless communication networks. The disclosure relates to key provision in a wireless communication network, in particular of keys used for communication between a user equipment and a secondary node.

### BACKGROUND

In modern communication technologies, user equipments (UE) need to access network nodes numerous times. For any access and/or communication session after access, an encryption and integrity protection of the transmitted and/or received messages is used in order to protect the communication against third parties. Such encryption and integrity protection requires a coordination between the network node and the UE that enables them to decrypt the encrypted messages and verify the integrity of the received messages from the respective other entity. In particular, both sides (UE and network node) need be informed about at least one pair of (cryptographic) key to decrypt and verify the integrity messages received from the other respective other entity.

### SUMMARY OF SOME EXAMPLE EMBODIMENTS

Network nodes of a modern wireless communication network may be structured into master nodes (MN) and secondary nodes (SN). A user equipment (UE) may be in communication with an MN alone (so called single connectivity) and may additionally (e.g., at the same time) be in communication with at least one (e.g., serving) SN (so called dual connectivity). Dual connectivity may in particular relate to a multi-RAT dual connectivity (MR-DC), for instance EN-DC (E-UTRA - NR Dual Connectivity), NR-DC (New Radio Dual Connectivity), NGEN-DC (NG-RAN - E-UTRA Dual Connectivity) and NE-DC (NR - E-UTRA Dual Connectivity). The following disclosure in particular relates to an access of a UE to an SN (in particular during a handover of the UE to an SN and/or a selective activation of an SN) but is not limited to this case. When an access of a UE to an SN is disclosed, a handover of the UE to the SN is disclosed as well, in particular a selective activation of the SN, to which the UE handovers.

A respective node may provide at least one or more cells. For instance, an MN may provide at least one primary cell (PCell). For instance, an SN may provide at least one PSCell and/or at least one SCell. At least some or (e.g., all) the cells involved in the following disclosure (e.g., at a given instance in time) may be part of the same cell group, for instance a master cell group (MSG) and/or a secondary cell group (SCG).

A first solution of providing keys to a UE and a network node (e.g., an MN or an SN) may be that for a given communication session and/or an upcoming access of the UE to the network node, a (e.g., single) key and/or a piece of information from which a key may be derived is provided to the network node and/or to the UE (e.g., as part of a configuration). The key may be specific to the network node (from perspective of the UE, specific to the UE from the perspective of the network node) and may be kept constant for a predefined period of time or until a predefined event occurs. It has been recognized that in this case, keys may be re-used. This may happen, for instance, if the UE disconnects from the network node (e.g., disconnects from a cell provided by the network node) and afterwards reconnects to the same network node (e.g., to the same or a different cell provided by the network node). Reusing a key is a security hazard.

Another solution may be to provide multiple SNs (e.g., some or all of the SNs of a given cell group) a list of keys to use. For any access by a UE, the SN will select the next key from the list. By using a list, it may be avoided to reuse an identical key. However, if all SNs obtain the same list of keys, a security breach of one SN may compromise communication security of all SNs that are configured to use the same list of keys. Also, when using a list from which a key is drawn for every new access of the UE, the SN need to be aware of any access of the UE to any SN using the same list in order to select the correct key. An increased signaling and bookkeeping overhead is the result while security weaknesses remain.

It is thus one of the objects of the disclosure to enable a particularly secure provision of a key to (e.g., secondary) network nodes while keeping bookkeeping and signaling overhead low.

According to a first example aspect, a method is disclosed, comprising:
- obtaining (e.g., from a master node, MN) at least one secondary node counter list (e.g., by RRC, e.g. in a RRCReconfig message), wherein the secondary node counter list corresponds to (e.g., are associated with) mutually different secondary nodes of a plurality of secondary nodes (e.g., respectively) (e.g., wherein to one of them the UE intends to request access and/or which are part of the same cell group as the MN and/or among one another),
- obtaining (e.g., from the master node, MN) an indication of a secondary node of the plurality of secondary nodes (e.g., one of the at least one secondary nodes to which the secondary node counter lists correspond) (e.g., by an RRC, e.g., a/ the same RRCReconfig, message),
- generating a secondary node key at least partially based on the at least one obtained secondary node counter list and the indication of a (e.g., the) secondary node (e.g., may involve selecting an unused counter of the lists),
- accessing (e.g., performing a random access procedure to) the secondary node (e.g., of the indication of (e.g., indicated by) a secondary node) using the generated secondary node key.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a node in a communication system and/or by a user equipment (UE). For instance, the method may be performed and/or controlled by using at least one processor of the electronic device.

According to a further example aspect, a computer program is disclosed, the computer program when executed by a processor causing an apparatus, for instance a server, a network node or a UE, to perform and/or control the actions of the method according to the first example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

A user equipment (UE) may for instance correspond to a mobile device such as for example a mobile phone, tablet, smartwatch, a laptop, a Personal Digital Assistant (PDA) device, a wearable, an Internet-of-Things (IOT) device, an IIOT (Industrial IOT) device the vehicle and/or combinations thereof. Such a user equipment may also be referred to as user device.

A network node may correspond to a component of a communication network such as for instance a Base Transceiver Station (BTS), a nodeB, an evolved node B (eNB), a Next Generation NodeB (gNB), a distributed unit (DU), a central unit (CU) and/or combinations thereof. A network node may be referred to as node.

The method may thus be performed and/or controlled by an apparatus, wherein the apparatus may in particular be a UE. The method may be performed within an existing communication session. The communication session may be established between the apparatus (e.g., UE) and at least one network node (e.g., the master network node). The communication session may involve a secondary node, in addition to the master node. The method may have the effect to adjust the existing communication session, in particular add, remove and/or change a secondary node, for instance to achieve and/or maintain dual connectivity (e.g., a communication session involving a master node and a secondary node). The method may relate to selectively activating a given SN for communication with the UE (e.g., in addition to an MN).

Here and in the following, a communication session between a UE and a network node (be it secondary or master node) comprises the network node to provide a cell (e.g., a spatial coverage area in which a UE may be located while receiving radio signals from and/or transmitting radio signals to the network node and/or while maintaining a communication session with the network node) in which the UE is located.

The method comprises obtaining at least one secondary node counter lists (SN counter lists). The secondary node counter lists may be obtained from a master node (MN), for instance an MN to which the UE is currently connected in a communication session. Obtaining may be done by radio resource control (RRC), for instance by means of an RRCReconfig message obtained by the apparatus from the MN.

Obtaining may here and in the following for instance denote that the respective information (itself) (here, secondary node counter lists) are received, e.g., by means of a radio communication link. Obtaining may in particular mean receiving as part of a radio resource control (RRC) message. Obtaining an information may also mean that (e.g., only) an indication of the respective information is received (e.g., an index, a reference and/or combinations thereof). The indication may allow the obtaining entity (here, the apparatus, for instance a UE), to derive the information (here, the secondary node counter lists).

The SN counter lists correspond to mutually different secondary nodes of a plurality of secondary nodes respectively. When a SN counter list corresponds to a respective SN, this may for instance mean that the SN counter list is specific to the SN, is associated with the SN, is usable by the respective SN (e.g., only) and/or is configured for the SN specifically (for instance by the MN). The plurality of SN may comprise at least one SN to which the UE intends to (e.g., based on a trigger signal by the MN or based on (e.g., signal quality) measurements) access (e.g., request access and/or perform a random access procedure).

Additionally or alternatively, the plurality of SN may be part of a same cell group, e.g. among one another and/or as the MN. If two or more network nodes (e.g., SN and/or MN) are part of the same cell group, this may for instance mean that the network nodes provide at least one cell respectively that is part of the same cell group. A cell group may for instance correspond to a master cell group (MCG) or a secondary cell group (SCG). For instance, the plurality of secondary nodes may be part of a same or of different SCG. For instance, a (e.g., the, e.g. all) SN counter lists may be specific to one cell group (e.g., SCG) to which the SNs belong (e.g., to which the SN counter lists are provided).

A given SN counter list may comprise at least two SN counter values that are sorted in a predefined order. There may for instance be a first SN counter value, a second SN counter value and so on. The SN counter list may for instance comprise at least 3, 4, 5, 6, 7, 8, 9, 10, 15, 16, 20, 30, 32, 40, 50, 60, 64, 70, 80, 90, 100, 128 or more SN counter values. The number of SN counter values in the list may correspond to the number of accesses the apparatus is able to perform to a respective SN before requiring a new SN counter list. A given SN counter value may for instance assume a discrete value from potential SN counter values. The SN counter values may for instance assume a power of 2 values. For instance, the SN counter value may assume a value between 0 and a given maximum value, wherein the maximum value may for instance be one of 1, 3, 7, 15, 31, 63,127, 255, 511, 1023, 2047, 4095, 2¹³, 2¹⁴, 2¹⁵, 2¹⁶, 2²⁴, 2³², or a higher power of 2 -1. The maximum value may be given by a number of bits (also called SN counter length) used for encoding and/or providing and/or obtaining the respective SN counter values. While the SN counter list may be represented as a list of SN counter values, the SN counter list may for instance additionally or alternatively be represented or stored as an array, a graph, a generating function and/or combinations thereof.

The method further comprises obtaining an indication of a secondary node of the plurality of secondary nodes. For instance, a secondary node indicated by the indication of a secondary node may correspond to a secondary node to which one of the obtained SN counter lists corresponds. For instance, such an indication may comprise and/or correspond to a secondary node identifier such as for instance a secondary node group ID (SN group ID). An SN group ID may be an identifier associated to a given SN. The SN may be associated with a cell group, e.g., an SCG. The SN group ID may be assigned by a master node, e.g., the master node providing the SN counter list and/or the indication of an SN. The indication of an SN may enable the apparatus performing the method according to the first example aspect to identify a particular SN and/or to select an SN counter list that corresponds to the SN indicated by the indication of a SN. In case the plurality of SN (e.g., only) comprises a single SN (e.g., only one SN counter list is obtained), the indication of a secondary node may be implicit, e.g., by obtaining a message (e.g., a message which may at least in some cases comprise an indication of an SN) that is free from an (e.g., explicit) indication of an SN (e.g., free from an group ID of a secondary node).

The indication of an SN may be obtained from the main node (e.g., the main node from which the at least one SN counter lists have been obtained beforehand). The indication of an SN may be obtained separately (e.g., in a separate signaling) from the at least one secondary counter lists. The indication of an SN may be obtained by means of RRC, for instance in a RRCReconfig message. The RRCReconfig message may be identical to or different from the RRCReconfig message by which the at least one secondary node counter lists are obtained. In other words, the at least one SN counter lists and the indication of an SN may be obtained in a same message or in different messages, wherein messages may for instance be RRC signalings, e.g. from the MN to the UE (the apparatus performing the method according to the first example aspect).

The method further comprises generating a secondary key. The generating is at least partially based on one of the obtained at least one SN counter lists and on the indication of a secondary node. For instance, the generating may involve selecting an SN counter list that corresponds to the SN indicated by the indication of a SN. The SN counter lists may thus be identifiable by and/or associable to an indication of a SN. The generating may further involve selecting an (e.g., unused) SN counter value from a (e.g., the selected) SN counter list. An unused SN counter value may be an SN counter value (e.g., of the SN counter list) which has not been used to access a secondary node before. For instance, the method may comprise selecting a next SN counter value from the SN counter list. For instance, the method may comprise keeping track of the last selected SN counter value and select the next SN counter value. Based on a previously (e.g., last) selected SN counter value, the next SN counter value may be defined by the predefined order in which the SN counter values are stored and/or ordered in the SN counter list. Additionally or alternatively, used values may be discarded so that the method comprises selecting a first (according to the order of SN counters in the list) remaining SN counter value. If no previously selected SN counter value is stored and/or known, the method may comprise selecting a first SN counter value from the SN counter list.

Generating a secondary node key may comprise providing inputs to a generating function (may be referred to as key generator) and obtaining an output from the generating function in response to the provided inputs. The generating may be based on a selected SN counter value and may additionally be based on further values such as a key associated with the master node (MN key). Additionally or alternatively, generating may be at least partially based on a length of the SN counter.

By generating the SN key based on the SN counter lists, an SN specific SN key may be generated for any new access to the SN. The SN keys corresponding to the SN counter values in the SN counter list may (e.g., all) be generated beforehand and stored. Additionally or alternatively, the SN keys may be generated one by one when they are needed for an upcoming access to an SN (e.g., addition or modification). As the SN counter lists respectively correspond to individual SNs, the SNs only need to keep track of access of a given UE (apparatus performing the method according to the first aspect) to themselves (e.g., to a single SN) and not of accesses of the UE to multiple SNs. As the method comprises using an indication of a SN when generating an SN key, the UE is enabled to associate its SN access to specific SNs and may for instance count accesses to any given SN separately from accesses to other SNs. From the SN key, further keys may be derived, for instance for specific protection of RRC messages (e.g Krrc enc, Krrc int) and/or for user plane messages Kupenc, Kupint.

The method further comprises accessing the secondary node of the indication of a secondary node (e.g., the SN indicated by the indication) using the generated secondary node key. Access may comprise performing a random access procedure to the secondary node. Additionally or alternatively, accessing may comprise a direct start of uplink (UL) and/or downlink (DL) traffic, e.g., without random access procedure, which may be referred to as a RACHless handover (e.g., in this case the UE may still use the generated SN key for securing the messages).

Using the SN key for accessing the SN may comprise encrypting or decrypting or integrity protecting at least one message using the SN key, wherein the message is transmitted to the SN and/or received from the SN (e.g., as part of a (e.g., random) access procedure).

According to an embodiment of the first example aspect,
- the at least one secondary node counter list comprises at least two secondary counter lists.

The at least one SN counter lists may comprise (e.g., at least) 2, 3, 4, 5, 6, 7, 8, 9, 10, 16, 20, 30, 32, 40, 50, 64, 70, 80, 90, 100, 110, 120, 128 or more SN counter lists. When two or more SN counter lists are provided, the indication of an SN obtained may comprise an (e.g., explicit) indication of an SN such as for instance an SN group ID.

By obtaining at least two SN counter lists, SN-specific SN counter values may be used. A first SN to which a first SN counter list is associated may not be able to decrypt messages sent to another, second, SN for which the keys are generated using another, second, SN counter list. This enhances security.

According to an embodiment of the first example aspect, the method further comprises
- counting a number of accesses (e.g., of the apparatus performing the method) to a respective secondary node, wherein generating the secondary key is further based on the counted (e.g., by the apparatus) number of accesses (e.g., by using the number as an index to the list).

The number of accesses to a respective secondary node may be counted. Counting may for instance be realized as memorizing the last SN counter drawn from a respective SN counter list corresponding to the SN. Counting may additionally or alternatively comprise incrementing a number by a (e.g., fixed) value for a given access to a respective SN. The number may for instance be used as an index for instance to the SN counter list. Counting may also be implemented by discarding (e.g., deleting, removing) entries (e.g., the currently used SN counter value) in a SN counter list corresponding to the respective SN.

According to an embodiment of the first example aspect
- the secondary node counter list comprises a non-monotonic sequence of secondary node counter values (e.g., respectively), or
- the secondary node counter list (e.g., lists) mutually differ from one another (e.g., comprise mutually different sequences of secondary node counters, respectively).

A non-monotonic sequence of SN counters may refer to a sequence of values which is neither fully descending nor fully ascending. In other words, when going through the SN counter values following the predefined order of a given SN counter list, there is at least one increase from a given to the following (e.g., immediately succeeding) SN counter value and at least one decrease from one SN counter value to the following (e.g., immediately succeeding) one. The SN counter values in a given SN counter list may be unique within the list, e.g. there may be no repetition of a counter value within the SN counter list. Alternatively, there may be at least one repetition of a given SN counter value in the SN counter list. Additionally or alternatively, (e.g., any) two successive SN counter values of a given SN counter list may be different from one another. Alternatively, at least one pair of successive SN counter values may be identical to one another.

The SN counter lists of different SN (e.g., of the plurality of SN) may be different from one another. At least one SN counter value may differ between SN counter lists (e.g., at a given (e.g., same) position within the respective counter lists). In particular, for a (e.g., any) given index to (e.g., location within) the (e.g., unaltered, as it is provided by the MN to the UE) SN counter lists (e.g., taking the Nth SN counter from the respective SN counter lists according to the predefined order of SN counter values within the respective SN counter list), the respective SN counter values drawn from the respective SN counter lists may differ. Additionally or alternatively, at least two SN counter lists may differ in their number of SN counter values and/or their respective maximum (e.g., possible) counter value (e.g., SN counter length). As the SN counter lists differ between SNs (e.g., of the same cell group), a security breach of one first SN does not allow deciphering communication between the UE (performing the method) and another SN, different from the first SN.

According to a second example aspect, a method is disclosed, comprising:
- generating at least one secondary node counter list, wherein the secondary node counter list corresponds to mutually different secondary nodes of a plurality of secondary nodes (e.g., respectively),
- providing an indication of at least one secondary node key to a secondary node of the plurality of secondary nodes (e.g., which are part of the same cell group as the MN and/or among one another), wherein the at least one secondary node key of the indication of at least one secondary node key corresponds to (e.g., can be derived by a UE from) a secondary node counter value comprised by the generated secondary node counter list corresponding to the secondary node of the plurality of secondary nodes, (e.g., simultaneously to the providing of two items below to the UE, or at least as one logical action)
- providing at least one of the generated secondary node counter list to a user equipment (e.g., served by the apparatus), and
- providing an indication of the secondary node of the plurality of secondary nodes to the user equipment (e.g., by RRC, e.g., in the same message with two generated SN counter lists).

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a network node in a communication system and/or by a user equipment (UE). For instance, the method may be performed and/or controlled by using at least one processor of the electronic device.

According to a further example aspect, a computer program is disclosed, the computer program when executed by a processor causing an apparatus, for instance a server, a network node or a UE, to perform and/or control the actions of the method according to the second example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the second example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

The method may thus be performed and/or controlled by an apparatus, wherein the apparatus may in particular be a network node, in particular a master node. The method may be performed within an existing communication session. The communication session may be established between the apparatus (e.g., master node, MN) and at least one UE (e.g., a UE performing a method according to the first example aspect). The communication session may involve a secondary node, in addition to the master node. The method may have the effect to adjust the existing communication session, in particular add, remove and/or change a secondary node, for instance to achieve dual connectivity (e.g., a communication session involving the master node and a secondary node).

The method comprises generating at least one secondary node counter lists. The secondary node counter lists correspond to mutually different secondary nodes of a plurality of secondary nodes, respectively. Generating may comprise to select an SN counter length, a number of SN counters of the SN counter list, the SN counter values and/or the order of SN counter values. At least one of these aspects, in particular the SN counter values, may be selected using a (e.g. pseudo) random process or a (e.g., deterministic) rule. Multiple SN counter lists for different SNs may be generated in a coordinated manner to ensure that they differ from one another.

The method further comprises providing an indication of at least one secondary node key (SN key) to a secondary node of the plurality of secondary nodes. The at least one secondary node key of the indication of at least one secondary node key corresponds to a secondary node counter value comprised by the generated secondary node counter list corresponding to the secondary node of the plurality of secondary nodes. If an SN counter value corresponds to an SN key, this may comprise that it is possible (e.g., for an apparatus performing the method according to the first example aspect) to derive the SN key at least partially based on the SN counter value. In other words, a SN counter value comprised by a generated SN counter list corresponds to an SN key indicated by the provided SN key indication. As disclosed with respect to the first example aspect, a key generator may be used to translate from a SN counter value to a SN key, for instance. The method according to the second example aspect may use a similar method or an essentially identical key generator (to the one used by the method according to the first example aspect) to obtain an SN key which corresponds to a SN counter value comprised by the SN counter list corresponding to the SN to which the indication of at least one SN key is provided.

Providing (an indication of an information) may here and in the following for instance denote that the respective information (itself) (here, at least one SN key) is transmitted, e.g., by means of a radio communication link. Providing may in particular mean transmitting as part of a radio resource control (RRC) message. Providing an indication of an information may also mean that (e.g., only) an indication of the respective information is received (e.g., an index, a reference and/or combinations thereof). The indication may allow the obtaining entity (here, the apparatus, for instance a secondary network node), to derive the information (here, at least one SN key).

The method further comprises providing at least one of the generated secondary node counter lists to a user equipment (UE). The UE may be configured to perform and/or control the method according to the first example aspect. The apparatus performing the method according to the second apparatus may act as a (serving) master node to the UE.

The method further comprises providing an indication of a secondary node of the plurality of secondary nodes to the user equipment. The indication of a secondary node indicates a secondary node corresponding to one of the generated SN counter lists.

At least one of providing the indication of at least one secondary node key, providing at least one of the generated secondary SN counter lists or providing an indication of a secondary node may be done as one logical action and/or simultaneously (e.g., essentially, e.g., within a time span of less than 100µs, 1ms, 10ms or 100ms) or alternatively as at least two separate logical actions and/or at different times.

According to an embodiment of the second example aspect
- the at least one secondary node counter list comprises at least two secondary counter lists.

According to an embodiment of the second example aspect
- providing (e.g., by SN Modification Request, SN Addition Request, SN Release Request/Procedure or via Class-2 signaling) the indication of at least one secondary node key (e.g., is done) before receiving an indication (e.g., by an RRCReconfigurationComplete message) of an imminent access to the secondary node by the user equipment using the secondary node key indicated by the indication of at least one secondary node key (e.g., from the user equipment).

An indication of an imminent access to the secondary node (e.g., the secondary node to which the indication of at least one SN key is provided) by the UE (e.g., the UE to which the at least one SN counter list and the indication of a SN is provided) may for instance be an RRC signaling and/or may correspond to an RRCReconfigurationComplete message obtained from the UE by a MN performing the method according to the second example aspect. The RRCReconfigurationComplete message may comprise a further RRCReconfigurationComplete message directed to the SN. The RRCReconfiguratioComplete message may indicate that a condition (e.g., a PSCell condition, e.g., of a CPAC) is met at the side of the UE in order to initiate an access to the respective SN. The indication of an imminent access to the secondary node by the UE may be received from the UE.

In this embodiment, the SN key may not be used immediately (e.g., in an immediately succeeding signaling action of the SN) but may be used for a future and/or upcoming access of a UE to the SN (e.g., addition or modification of the SN).

The providing may in this case correspond to and/or be done as part of a secondary node modification request, secondary node addition request, secondary node release request (e.g., a release of a (e.g., previous) communication session using an SN key different from a (e.g., any) SN key indicated by the provided indication of at least one SN key). Providing may (e.g., in this case) additionally or alternatively be done by class-2 and/or Xn signaling.

According to an embodiment of the second example aspect
- the indication of at least one secondary node key corresponds to a secondary node key list (e.g., may be generated by MN) corresponding to the generated secondary node counter list corresponding to the secondary network node, and
- (e.g., the) providing (e.g., is done) (e.g., by RRC) as part of at least one of
   - a secondary node modification request, or
   - a secondary node addition request.

The indication of at least one SN key may correspond to a secondary node key list. An SN key list may comprise to a list of SN key in a predefined order. The SN key list may correspond to the generated SN counter list. In particular the SN keys in the SN key list may correspond (e.g., one by one) to the SN counter values in the generated SN counter list. For instance, when iterating through the SN counter list (e.g., selecting one SN counter value after the other, following the predefined order), generating an SN key based on the (e.g., every) selected SN counter values (and potentially other factors and/or variables such as an MN key and/or an SN counter length) and storing them as a sequence, one after the other, in the order of generating them based on the SN counter values, the SN key list may be obtained. The SN key list may comprise SN keys corresponding to the (e.g., all) SN counter values contained by the SN counter list or may alternatively (e.g., only) correspond to a subset of the SN counter values contained by the SN counter list.

Providing may in this case be done by an RRC signaling. Providing may additionally or alternatively be done as part of an SN modification request and/or an SN addition request.

Providing an SN key list to the SN has the advantage of a very fast access as no separate key needs to be provided to the SN for a new access of a UE.

According to an embodiment of the second example aspect
- the indication of at least one secondary node key corresponds to a (e.g., single) secondary node key for the access by the user equipment to the secondary network node and
- (e.g., the) providing (e.g., is done) (e.g., by RRC) as part of at least one of
   - a secondary node addition request (e.g., of the SN to which the counter/ key corresponds), or
   - a secondary node release request (e.g., of a session established in a random access procedure using a different SN key and/or with a different SN).

The indication of the at least one secondary node key may correspond to an (e.g., single) SN key itself. E.g., the SN key may be transmitted by the MN to the SN. The SN key may enable and/or be used for the access by the UE to the SN.

The providing may here be done by RRC. Additionally or alternatively, the providing may be done as part of an SN addition request, e.g. a request for adding the SN to which the SN counter list and/or the SN key corresponds. Additionally or alternatively, the providing may be done as part of an SN release request, e.g. a request to release a (e.g., former and/or to be released) communication session established (e.g., with the same UE) using a different SN key.

In this case, the SN key may be provided for a future access by the UE to the SN. Sharing a single key early offers a strong security. The SN may in this case be referred to as a candidate SN as it is prepared (by the provision of the SN key) for an upcoming access by a UE (e.g., the UE that has been connected previously to the SN), while the access procedure (by the MN, e.g., SN modification and/or addition) has not yet begun. In other words, in this embodiment, the SN key is provided to an SN to which the MN has not yet started to prepare an access by the UE (and/or started a CPAC procedure) but may instead in the future start such an access.

According to an embodiment of the second example aspect
- providing (e.g., by an SN Reconfig Complete message) the indication of at least one secondary node key (e.g., is done) after receiving an indication of an imminent access to the secondary node by the user equipment using the secondary node key of the indication of at least one secondary node key or
- providing the indication of at least one secondary node key (e.g., is done) before receiving an indication of an imminent access to the secondary node by the user equipment using the secondary node key of the indication of at least one secondary node key, wherein at least one of
   - the indication of at least one secondary node key comprises the secondary node key for the access by the user equipment to the secondary network node or
   - providing (e.g., is done) as part of a secondary node reconfiguration complete message (e.g., from MN to SN).

This embodiment covers the case wherein the SN key is provided for an (e.g., immediately) upcoming access by the UE to the SN. The SN key may be provided as part of a SN reconfiguration complete message (e.g., an RRC message). In this embodiment, it may already be certain that the UE will connect to the SN (e.g., immediately) and the SN will not be referred to as a candidate SN. In other words, here, the SN key is provided to the SN after the MN has already started to prepare an access by the UE to the SN (e.g., a SN modification and/or SN addition) and/or has started a CPAC procedure.

According to an embodiment of the second example aspect, the method further comprises
- counting a number of accesses by a respective user equipment to a respective secondary node, wherein the indication of at least one secondary key is at least partially based on the counted number of accesses.

The MN may keep track of the accesses of at least one or more UEs to respective SNs. This may in particular be the case if the MN provides (e.g., single) SN keys to the respective (candidate) SN. In order to select the correct entry from either an SN counter list and/or SN key list and/or generate the correct SN key, the MN needs to be informed of the SN counter that the UE will select from its own SN counter list. Counting the number of accesses enables the MN to provide the correct SN key to the SN. In an embodiment, where the SN is provided with an SN key list, the SN may track the number of accesses and the MN is freed of the burden to monitor the accesses by the UE. Keeping track of a number of accesses may be done by discarding (e.g., used) SN counter values from an SN counter list and/or discarding (e.g., used) SN keys from the SN key list.

According to an embodiment of the second example aspect,
- the secondary node counter lists comprise a non-monotonic sequence of secondary node counters respectively or
- the secondary node counter lists mutually differ from one another.

As a result, the SN key lists that may be provided to (e.g., different) SNs may mutually differ from on another.

Disclosure presented with respect to the first example aspect is disclosed for the second example aspect as well, where applicable.

According to a third example aspect, a method is disclosed, comprising:
- obtaining an indication of at least one secondary node key from a master node (e.g., of a same cell group as an apparatus performing and/or controlling the method according to the third example aspect), wherein the at least one secondary node key corresponds to a counter comprised by a generated secondary node counter list (e.g., corresponding to an apparatus performing and/or controlling the method according to the third example aspect),
- performing a random access procedure with (e.g. initiated by) a user equipment (e.g., by accepting a random access procedure) using one of the at least one secondary node key indicated by the obtained indication of at least one secondary node key.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a network node in a communication system and/or by a user equipment (UE). For instance, the method may be performed and/or controlled by using at least one processor of the electronic device.

According to a further example aspect, a computer program is disclosed, the computer program when executed by a processor causing an apparatus, for instance a server, a network node or a UE, to perform and/or control the actions of the method according to the third example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the third example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

The method may thus be performed and/or controlled by an apparatus, wherein the apparatus may in particular be a network node, in particular a secondary node. The method may at least partially be performed within an existing communication session. The communication session may be established between the apparatus (e.g., secondary node, SN) and at least one UE (e.g., a UE performing a method according to the first example aspect). The method may have the effect to adjust the existing communication session, in particular add and/or release the secondary node, for instance to achieve dual connectivity (e.g., a communication session involving a master node and the secondary node).

The indication of at least one SN key may be obtained from a master node, wherein the master node is part of a same cell group as the apparatus performing the method according to the third example aspect, e.g., a secondary node.

The at least one secondary node key corresponds to a counter comprised by a generated SN counter list corresponding to the apparatus performing the method according to the third example aspect. The at least one SN key therefore corresponds to an SN counter list that is specific to the apparatus performing the method. The at least one SN key may in particular be different from a (e.g., any) SN key received by another SN (e.g., within the same cell group).

The indication of at least one SN key may be associated with and/or correspond to a UE. The method may comprise associating the indication of the at least one SN key and/or the at least one SN key of the indication to a respective UE, for instance to a Conditional PSCell Addition and Change (CPAC) context that may for instance be specific to a UE. The method may comprise storing multiple indications of the at least one SN key and/or multiple at least one SN key of the indication for different UEs respectively.

The method comprises performing an access by a user equipment. For instance, this may comprise accepting a (random) access request by the UE. The access may be initiated by the UE. The apparatus (and/or the UE) may be configured to perform the access using one of the at least one secondary node key indicated by the obtained indication of the at least one secondary node key. Thus, by receiving the indication of at least one secondary node key, the method enables an apparatus performing the method according to the third example aspect to perform an access with a UE performing the method according to the first example aspect and/or in coordination with a master node performing a method according to the second example aspect. This allows a particularly secure, yet fast access of a UE to the apparatus (e.g., secondary node) performing the method according to the third example aspect.

According to an embodiment of the third example aspect,
- obtaining the indication of at least one secondary node key (e.g., is done) as part of a secondary node modification request (e.g., wherein the apparatus is currently serving the UE) or a secondary node addition request (e.g., to the apparatus, from the MN), or
- obtaining the indication of at least one secondary node key (e.g., is done) as part of a secondary node modification request or a secondary node addition request, wherein the indication of at least one secondary node key corresponds to a secondary node key list (e.g., may be generated by the MN) corresponding to the generated secondary node counter list corresponding to the apparatus.

The secondary node modification request may be received in a communication session in which the apparatus performing the method according to the third example aspect is currently serving the UE. The secondary node addition request may be received by the apparatus performing the method according to the third example aspect while being disconnected from the UE, e.g., not serving the UE. The SN modification request and/or the SN addition request may be received from the master node.

The indication of at least one secondary node key may correspond to a secondary node key list. The secondary node key list may be generated by the master node and corresponds to the generated secondary node counter list corresponding to the apparatus performing the method according to the third example aspect (e.g., a secondary node).

According to an embodiment of the third example aspect,
- obtaining the indication of at least one secondary node key (e.g., is done) at least one of after a secondary node addition request or as part of a secondary node reconfiguration complete message (e.g., to the apparatus, from the MN), or
- obtaining the indication of at least one secondary node key (e.g., is done) as part of a secondary node reconfiguration complete message, wherein the indication of at least one secondary node key corresponds to a (e.g., single) secondary node key for an (e.g., immediately ensuing) access by the user equipment to the apparatus.

In this embodiment, an (e.g., single) SN key may be obtained (e.g., shortly) before it is needed by the apparatus performing the method according to the third example aspect. For instance, the MN may already have started preparation for an access of the UE to the SN before the indication of a (e.g., single) SN key is obtained by the SN. For instance, the SN key may be obtained after a CPAC procedure (e.g., to the SN) (e.g., by the MN) may have started.

According to an embodiment of the third example aspect,
- obtaining the indication of at least one secondary node key (e.g., is done) as part of a secondary node addition request (e.g., to the apparatus) or a secondary node release request (e.g., at the end of a communication session initiated with another SN key, from the MN), or
- obtaining the indication of at least one secondary node key (e.g., is done) as part of a secondary node addition request or a secondary node release request, wherein the indication of at least one secondary node key corresponds to a (e.g., single) secondary node key for an (e.g., future, potential) access by the user equipment to the apparatus.

In this embodiment, an (e.g., single) SN key may be obtained (e.g., well) before it is needed by the apparatus performing the method according to the third example aspect. For instance, the MN may not yet have started preparation for an access of the UE to the SN before the indication of a (e.g., single) SN key is obtained by the SN. The SN key may be obtained by the SN before a CPAC procedure (e.g., to the SN) (e.g., by the MN) may have started. Instead, such preparation may be performed afterwards. The apparatus performing the method according to the third example aspect may in this embodiment be referred to as a candidate SN.

The indication of at least one SN key may be obtained as part of a secondary node addition request. At this stage, it is not yet known when exactly the UE may proceed to attempt an access to the apparatus performing the method according to the third example aspect. Additionally or alternatively, the indication of at least one SN key may be obtained as part of an SN release request. The SN release request may be obtained at the end of a communication session with the UE using a different SN key than indicated by the indication of an SN key obtained as part of the SN release request. By having previously provided the UE with a communication session, the network (e.g., the MN) may consider the apparatus performing the method according to the third example aspect as a candidate SN for a future access by the UE.

According to an embodiment of the third example aspect, the method further comprises
- counting a number of accesses by a respective user equipment (e.g., to an apparatus performing and/or controlling the method), and
- selecting the (e.g., the one used for access by the UE) secondary node key from the secondary node key list based on the counted number of accesses.

In case the indication of at least one SN key comprises an SN key list, the apparatus performing the method according to the third example aspect may need to keep track of the accesses by a respective UE in order to select the correct SN key from the SN key list.

According to an embodiment of the third example aspect,
- the secondary node counter lists comprise a non-monotonic sequence of secondary node counters respectively or
- the secondary node counter lists mutually differ from one another.

As a consequence, the SN key list may be specific to the apparatus performing the method according to the third example aspect.

Disclosure presented with respect to the first or second example aspect is disclosed for the third example aspect as well, where applicable.

As a fourth example aspect, a system is disclosed comprising at least one UE performing and/or controlling a method according to the first example aspect, at least one MN performing and/or controlling a method according to the second example aspect, and at least one secondary node performing and/or controlling a method according to the first example aspect.

For instance, the system comprising a user equipment, UE, a master node, MN, and a secondary node, SN, wherein
- the UE is configured to
   - obtaining (e.g., from the main node, MN) at least one secondary node counter list (e.g., e.g., by RRC, e.g. in a RRCReconfig message), wherein the secondary node counter lists corresponds to (e.g., are associated with) mutually different secondary nodes of a plurality of secondary nodes respectively, comprising the secondary node (e.g., wherein to one of them the UE intends to request access and/or which are part of the same cell group as the MN and/or among one another),
   - obtaining (e.g., from the main node, MN) an indication of a secondary node of the plurality of secondary nodes (e.g., one of the at least one secondary nodes to which the secondary node counter lists correspond) (e.g., by an RRC, e.g., a/ the same RRCReconfig, message),
   - generating a secondary node key at least partially based on one of the obtained secondary node counter list and the indication of the secondary node (e.g., may involve selecting an unused counter of the lists),
   - accessing (e.g., performing a random access procedure to) the secondary node of the indication of (e.g., indicated by) a secondary node using the generated secondary node key,
- the MN is configured to
   - generating at least one secondary node counter list, wherein the secondary node counter lists corresponds to mutually different secondary nodes of a plurality of secondary nodes respectively, comprising the secondary node,
   - providing an indication of at least one secondary node key to the secondary node of the plurality of secondary nodes (e.g., which are part of the same cell group as the MN and/or among one another), wherein the at least one secondary node key of the indication of at least one secondary node key corresponds to (e.g., can be derived by a UE from) a secondary node counter value comprised by the generated secondary node counter list corresponding to the secondary node of the plurality of secondary nodes, (e.g., simultaneously to the providing of two items below to the UE, or at least as one logical action)
   - providing at least one of the generated secondary node counter list to the user equipment (e.g., served by the MN), and
   - providing an indication of the secondary node of the plurality of secondary nodes to the user equipment (e.g., by RRC, e.g., in the same message with two generated SN counter lists), and
- the SN is configured to
   - obtaining an indication of at least one secondary node key from the master node (e.g., of a same cell group as the SN), wherein the at least one secondary node key corresponds to a counter comprised by the generated secondary node counter list corresponding to the SN,
   - performing an access of (e.g., a random access procedure with) (e.g. initiated by) the user equipment (e.g., by accepting a random access procedure) using one of the at least one secondary node key of the obtained indication of at least one secondary node key.

Disclosure presented with respect to the first, second, or third example aspect is disclosed for the fourth example aspect as well, where applicable.

### BRIEF DESCRIPTION OF THE DRAWINGS

In the figures show:
- Fig. 1a,b: two example embodiments of a user equipment switching secondary cell according to all example aspects;
- Fig. 2: an example embodiment of a key generation according all example aspects;
- Fig. 3: an example embodiment of a key generation according all example aspects;
- Fig. 4a-d: a signaling diagram of an example embodiment according to all example aspects;
- Fig. 5a-c: a signaling diagram of an example embodiment according to all example aspects;
- Fig. 6a-d: a signaling diagram of an example embodiment according to all example aspects;
- Fig. 7: a flow chart of a method according to an embodiment according to the first example aspect;
- Fig. 8: a flow chart of a method according to an embodiment according to the second example aspect;
- Fig. 9: a flow chart of a method according to an embodiment according to the third example aspect;
- Fig. 10: a block diagram illustrating an embodiment according to the first example aspect;
- Fig. 11: a block diagram illustrating an embodiment according to the second example aspect;
- Fig. 12: a block diagram illustrating an embodiment according to the third example aspect;
- Fig. 13: examples of storage media.

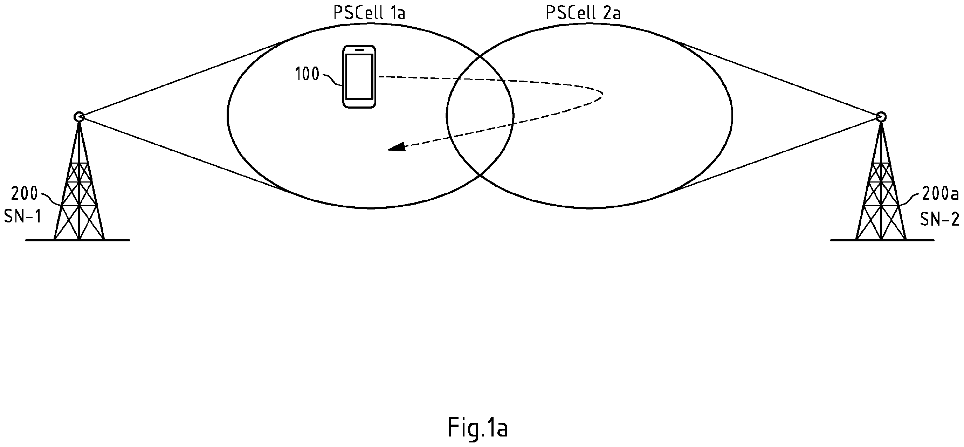

Fig. 1a demonstrates a scenario of dual connectivity in which a UE 100 first moves away from a cell PSCell 1a which is provided by a network node 200 (SN1) to another cell PSCell 2a provided by a network node 200a (SN2). A PSCell is a primary cell in a secondary cell group (SCG). It may be combined with a secondary cell (SCell) in the SCG with carrier aggregation (CA). An initial access may be performed to the PSCell.

In a next step, the UE 100 moves away from cell PSCell 2a again, back to cell PSCell 1a. In such a scenario, according to prior art, the UE 100 may not receive any configuration for cell PSCell 1a during the process. I.e., the UE 100 may use the same configuration previously obtained for accessing cell PSCell 1a, including a respective key used to access cell PSCell 1a (i.e., the node 200 (SN1) providing cell PSCell 1a). The UE 100 may add cell PSCell 1a in a selective activation step. In addition to cell PSCell 1a and/or cell PSCell 2a, the UE 100 may be connected to a master node (not shown) so that a dual connectivity involving a master node and a secondary node (network node 200 (SN1), 200a (SN2)) is realized.

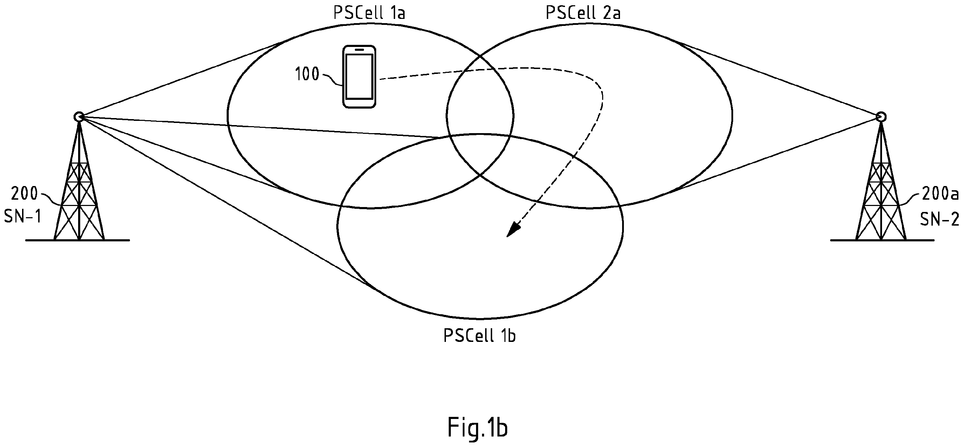

In Fig. 1b, a similar scenario is presented, in which the UE 100 also first moves from a cell PSCell 1a provided by a first network node 200 (SN1) to another cell PSCell 2a provided by a second network node 200a (SN2). The UE then moves back to a cell provided by the network node 200 (SN1) from which it originated, with the only difference that now, it connects to network node 200 (SN1) within a different cell PSCell 1b which is also provided by the network node 200 (SN1). Here as well, according to prior art, the UE 100 may perform a selective activation that reuses a previously obtained configuration for network node 200 (SN1). It may also in this case reuse a key to access network node 200 (SN1).

Both scenarios shown in Fig. 1a and 1b pose security issues in prior art as a same key (SN key) is used to access a secondary node 200, 200a. The key (often noted as S-K_{gNB}) may be derived from an sk-counter in an executed conditional reconfiguration. The same S-K_{gNB} will be used until a new configuration is obtained. The proposed solution now provides the UE 100 with a plurality of SN counter values (as SN counter lists) for at least one or more secondary nodes (200, 200a). When accessing a secondary node (200, 200a) for the second time (or third, fourth or higher time) as shown in Fig. 1a and 1b, it will use an unused SN counter value to access the secondary network node (here network node 200 (SN1) but also 200a (SN2)). The UE may change the SN counter value upon any SN change.

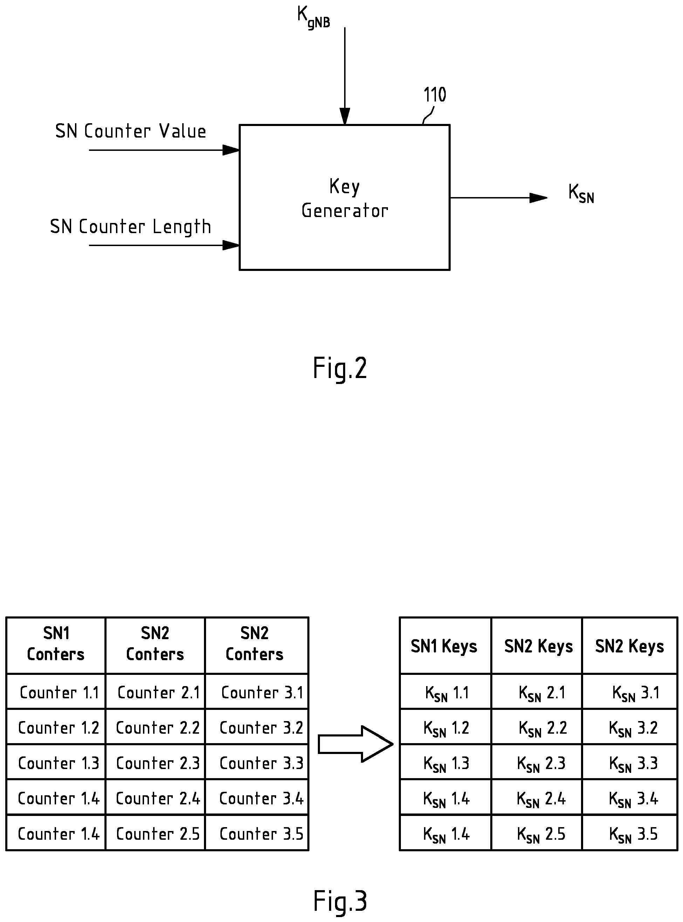

To illustrate the SN key generation, Fig. 2 shows a key generator 110 which may for instance reside in a UE (performing a method according to the first example aspect) or a master node (performing a method according to the second example aspect), for instance as a functional unit, e.g. as a functional block within a computer code stored in memory which, when executed by a processor, performs the now described functionality. The key generator 110 may receive a key K_{gNB} which is specific to a network node, in particular a master node. In addition, it receives an SN counter value. The SN counter value may for instance be drawn from an SN counter list which has previously been obtained (in case of a UE) from a master node (e.g., alongside the master node key K_{gNB}). Optionally, the key generator 110 may obtain an SN counter length which may for instance indicate a range of possible values that the SN counter value may assume. Based on at least the MN key K_{gNB} and the SN counter value and optionally the SN counter length, the key generator outputs a secondary node key K_{SN}. The key generator 110 may to this end perform a mathematically defined operation which creates a key suitable for the end-to-end encryption method used between UE and SN.

In other words, when the UE is setup a dual connectivity, UE needs an SN Key, K_{SN} to secure and encrypt its connection with a serving SN. In a current MR-DC scenario, the SN key is generated by UE using the SN counter value that is provided by MN (e.g., as part of an SN counter list), (optionally) the length of the SN counter, and MN Key K_gNB as it is shown in Figure 2. The serving SN should also know the SN key that the UE will use to have end-to-end encryption. Since an MN may determine an SN counter value for the UE, the MN may already know the key that will be generated by the UE using the counter, the MN may then calculate the SN key using the appropriate counter value (e.g., by using a similar and/or identical key generator 110 as shown in Fig. 2) and informs the SN key to be used to the SN before that SN becomes the serving SN (either in SN addition or SN change). For instance, e.g. in an SN addition or an SN change, the MN may shares the K_{SN} with the candidate SN during the preparation. Such provision may for instance be carried out by RRC, for instance as part of an S-NODE ADDITION REQUEST message or other messages as detailed below.

Fig. 3 now demonstrates one of the concepts of the present disclosure. On the left side, a table is shown that illustrates a plurality of SN counter lists (i.e., in the claim language, at least on secondary node counter list). A column can be considered as one SN counter list which is specific to a secondary node SN1, SN2 or SN3. To a given SN counter value (e.g., counter 1.1), a respective SN key (e.g., K_{SN} 1.1) may be associated. The SN key may be derived (and/or derivable) from the associated SN counter value using a key generator as shown in Fig. 2. Additionally, an MN key K_{gNB} and/or a SN counter length may be used.

At least one SN counter list (one of the columns shown in Fig. 3) may be generated by an MN, provided (e.g., by the MN) to a UE and/or obtained by a UE.

The UE may here and in any other embodiment obtain an SN counter length and/or a master node key, e.g., from the master node. The master node may here and in any other embodiment provide an SN counter length and/or a master node key to the UE.

The secondary node needs to know the SN key which the UE is going to use for an upcoming access (e.g., subsequent CPAC) to the SN. The SN keys may for instance be provided as an indication of at least one SN key to a secondary node. For instance, at least one entry or the (e.g., entire) left column of SN keys (so called SN key list) may be provided to a secondary node SN1. The SN is then enabled to decrypt messages transmitted by the UE based on one of the SN keys in the SN key list.

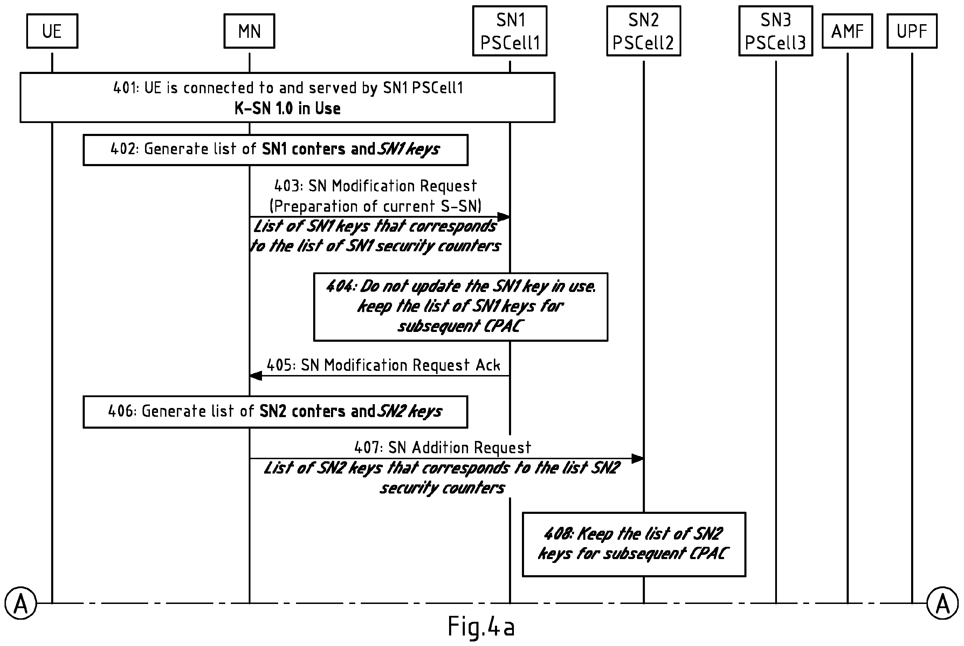

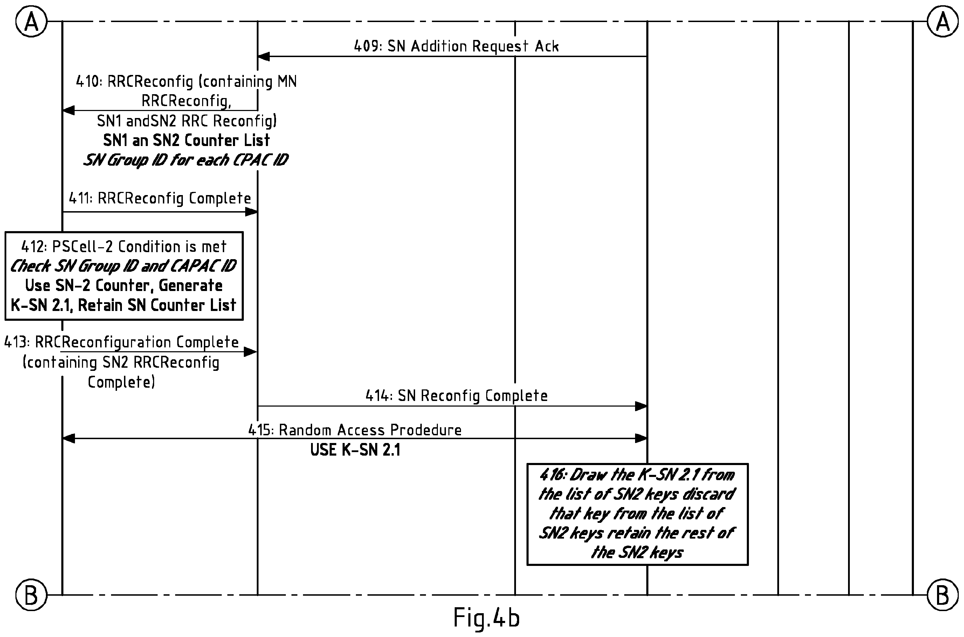

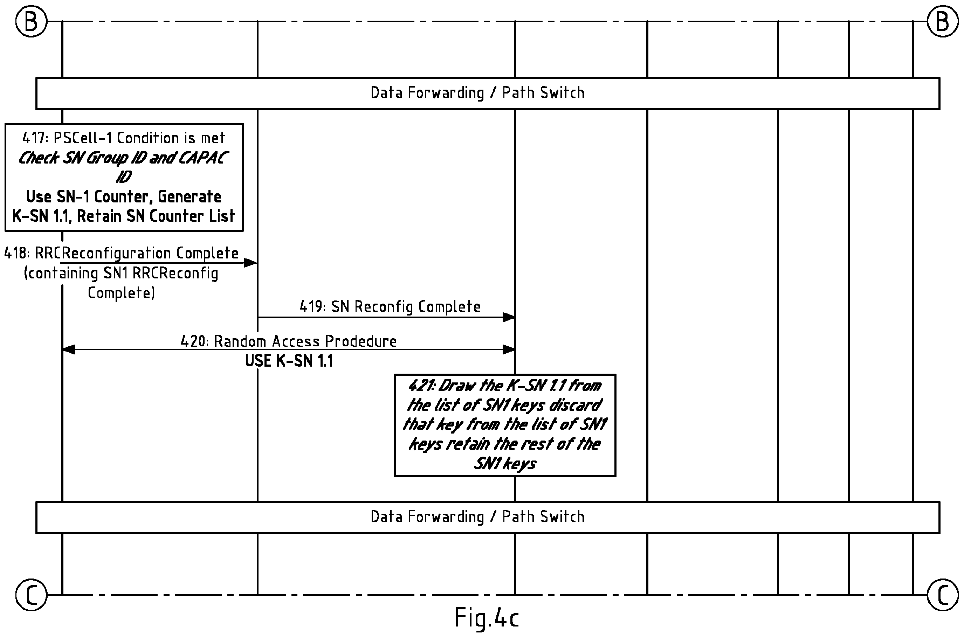

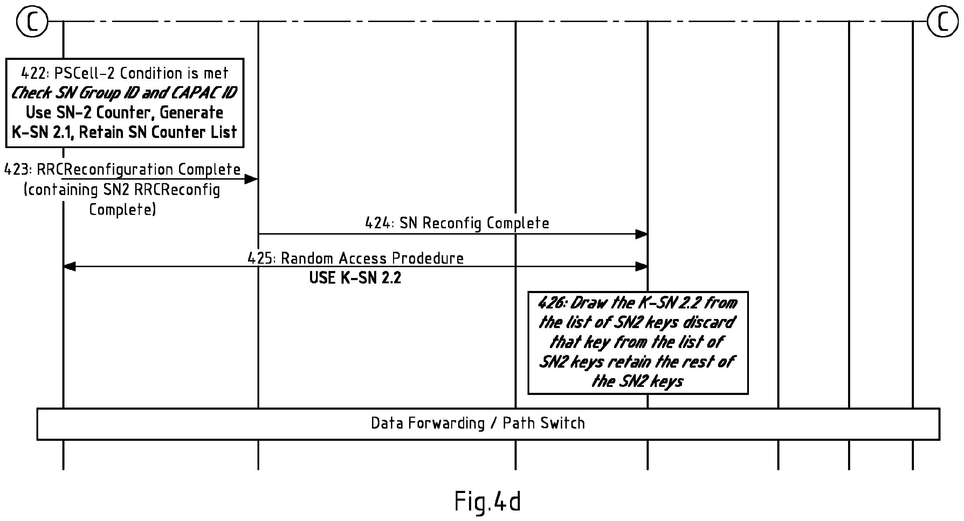

Fig. 4 demonstrates an example embodiment as a signaling diagram. Shown are signals exchanged between a UE (e.g., performing a method according to the first example aspect), a master node (MN) (e.g., performing a method according to the second example aspect), a first secondary node (SN1) and a second secondary node (SN2) (e.g., wherein the SN1 and/or SN2 perform a method according to the third example aspect, respectively). In the shown embodiment, an SN key list (instead of a single SN key) is shared with secondary nodes SN1 and SN2.

Signaling 401: The UE is connected to master node MN and the first secondary node SN1 PSCell1. At that step, the UE is using the SN key K_{SN} 1.0 for SN1 in a PSCell-1 link.

Signaling 402: The MN generates a list of SN counters (SN counter list) for SN1 (i.e., the SN counter list may be specific to the first secondary node SN1). In this embodiment, the MN also generates SN1 keys that correspond to the lists of generated SN1 counters. Such generation of keys may be conditional upon SN1 being considered for selective activation, i.e. for `return back' of the UE to SN1 at a later stage (see Fig. 1a and 1b).

Signaling 403: The MN will share the list of K_{SN} (SN key list) of SN1 (e.g., for selective activation) with SN1 via a SN modification procedure (e.g., as part of an SN modification request).

Signaling 404: When the SN1 receives the SN1 keys, it may in particular not update any key for the ongoing transmission (communication session) between SN1 and the UE. Such updating may be done in legacy behavior. Here, updating of a key for the current communication session may be omitted because the obtained/provided SN keys are intended to be used by the SN1 for UE return, e.g., as part of selective activation, i.e., if the UE handovers to another SN and handovers back to SN1. SN1 keeps those list of SN keys along with the UE context (e.g., associates the SN key list with the UE).

Signaling 405: The SN1 acknowledges the SN Modification Request.

Signaling 406: The MN generates the list of SN counters for SN2. The MN will also generate the SN2 keys that correspond to the list of SN2 counters.

Signaling 407: The MN will share the list of SN2 keys (SN key list) with SN2 via SN addition procedure.

Signaling 408: The SN2 will keep all the SN2 keys that are shared by the MN and use them one by one when UE handovers the SN2 in a subsequent manner, e.g. following the order of the SN2 key list.

Signaling 409: The SN2 acknowledges the SN Addition Request.

Signaling 410: The MN configures the UE with an SCPAC preparations of SN1 and SN2. MN provides the list of SN1 and SN2 counters which were generated in the previous steps to the UE. These counter values are provided as list of SN-counters (SN counter list) along with an SN-Key-Group-ID (indication of an SN).

Here and in any other embodiment, the MN may assign a unique SN-Key-Group-ID for (e.g., each) SN (e.g., involved in selective activation).

The MN includes an 'SN-Key-Group-ID' (as an indication of an SN) in (e.g., each) candidate configuration. When UE switches from a current serving-cell (e.g., SN1) to a new (serving-)cell (e.g., SN2) as part of selective activation and/or if there is change in SN-Group-ID, the UE applies an 'unused' SN-counter value from the SN counter list obtained which may correspond to the new SN-Key-Group-ID (indication/identification of the SN to handover to) in order to generate an S-KeNB and/or S-KgNB to be used in the target cell, e.g. to access the target SN (SN2, e.g.).

Signaling 411: The UE sends the RRCReconfigurationComplete when it completes the RRCReconfiguration received from the MN.

Signaling 412: The UE may evaluate that the PScell-2 meets the CPAC condition. The UE may then compare the SN Group ID (e.g., of a given SN counter list) and the CPAC ID and decides to use the new SN key after the execution of CPAC towards the PSCell-2 as PSCell-2 is under an SN (SN2) different than the previous serving SN (SN1). The UE may draw the SN counter of the relevant SN group and/or the relevant SN counter list corresponding to the correct SN and generates the SN key accordingly.

Signaling 413-14: The UE sends the RRCReconfigurationComplete to the MN which will contain an SN RRC Reconfiguration Complete. The MN will forward the SN RRC Reconfiguration complete to the target SN, i.e., SN2.

Signaling 415: The UE initiates a random access procedure (RACH) towards SN2 and the UE will use the next SN key, K-SN 1.1 that is generated by using the next SN1 counter.

Signaling 416: The SN2 will identify that the UE is accessing first time to this SN2 and hence the SN2 will draw the next K-SN, K-SN 2.1, from the list of SN2 keys that are provided by the MN. The SN2 will discard this key in the future CPAC procedures as the same key will not be used twice.

Signaling 417: SN1 to SN2 change will be followed by the SN2 to SN1 change, i.e., the PSCell-1 condition is met. The UE identifies that it needs to draw the next SN1 counter and generate new SN1 key for this access (same procedure described in signaling 412). The UE will discard this counter for the future use and retain the other SN1 counters.

Signaling 418-20: Same as signaling 413 to 15.

Signaling 421: Same as signaling 416, the SN1 will identify that the UE is accessing from another SN to SN1 and hence the SN1 will draw the next KSN, K-SN 1.1, from the list of SN1 keys that are provided by the MN. The SN1 will discard this key or mark it as used for future CPAC procedures as the same key will not be used twice.

Signaling 422 to 26: The same procedure as it was described in signaling 412 to 16. It was given here to show that how the SN2 and the UE will use the different keys in those steps (different than those in signaling 12 to 16).

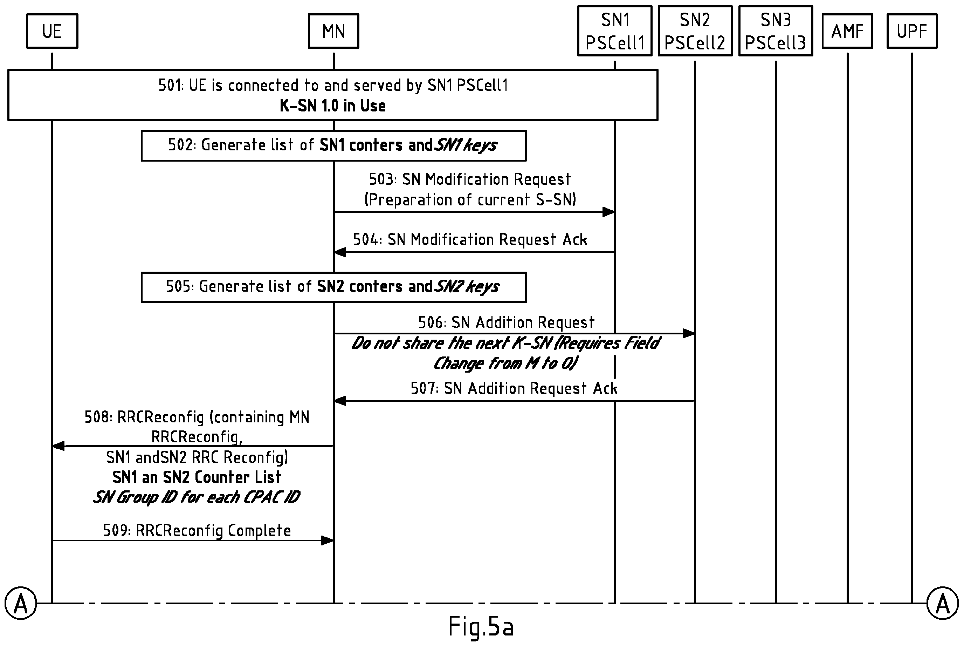

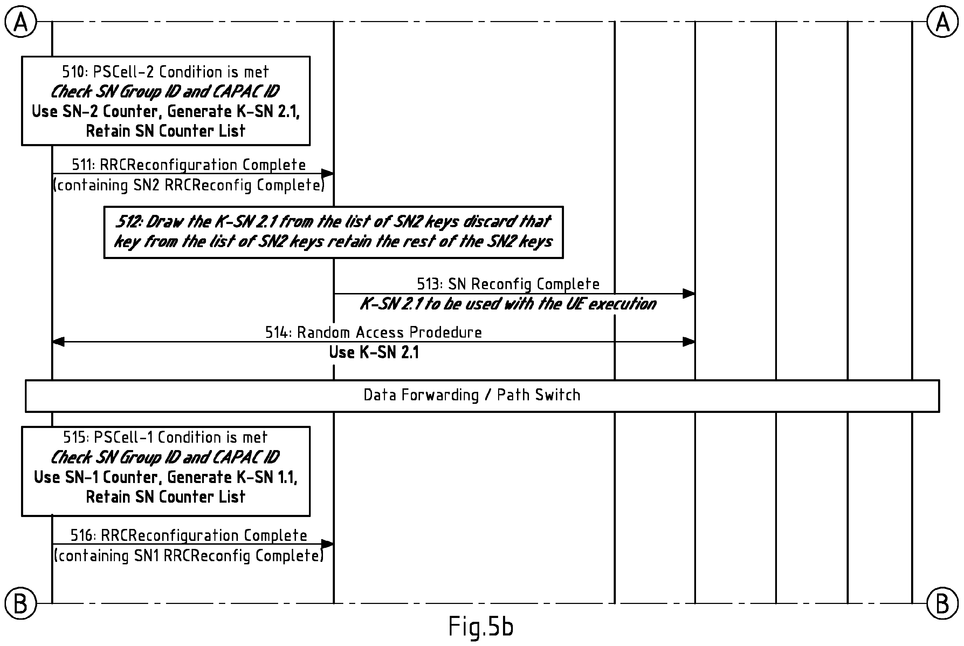

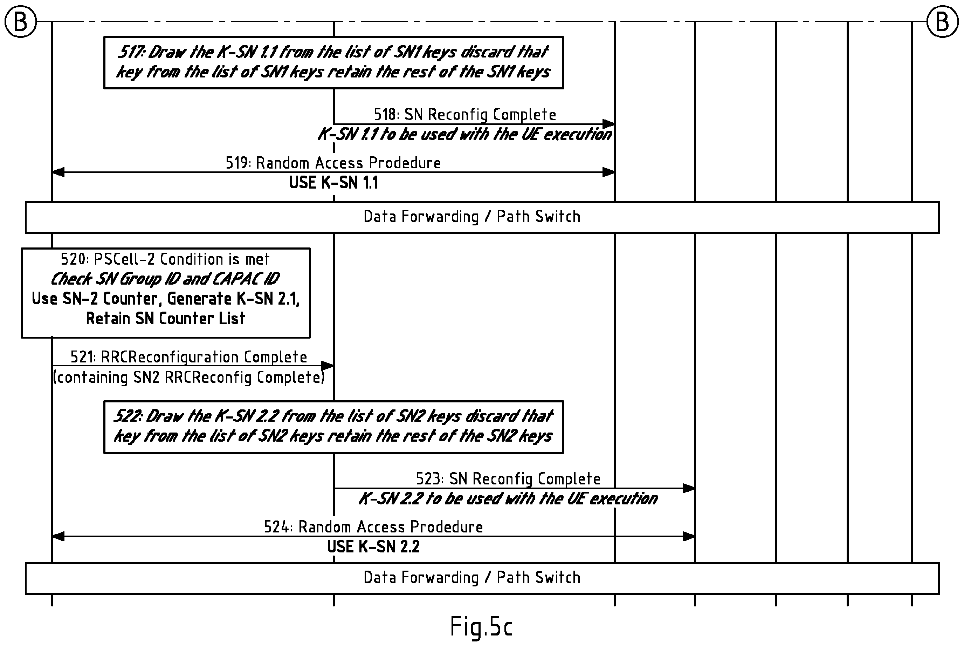

Figure 5 shows the signaling diagram of another embodiment solution wherein the SN key is provided on demand, i.e. shortly before it is needed. The entities involved and their relation to the aspect is the same as described with respect to Fig. 4. Some signalings which are different than from Fig. 4 are described below, while some may be identical.

In signaling 6, the MN does not share the next SN key with the candidate SNs until they need to know. The MN also does not provide a (e.g., full) list of SN keys.

Once the UE executes an inter-SN (i.e., changing the secondary node) CPC (conditional PSCell change) (signaling 10, 11), the MN draws a SN2 key (generated in signaling 5), wherein the UE will use the SN2 key. The MN will share the SN2 key with SN2. The key is provided as part of an SN Reconfig Complete message, for instance.

This will be repeated among the subsequent SN change, MN shares the SN key with the new SN that the UE handovers to. For example, once the UE executes the inter-SN CPC again (signaling 15, 16), the MN draws the SN1 key (generated in signaling 2) that the UE will use and share this with SN1.

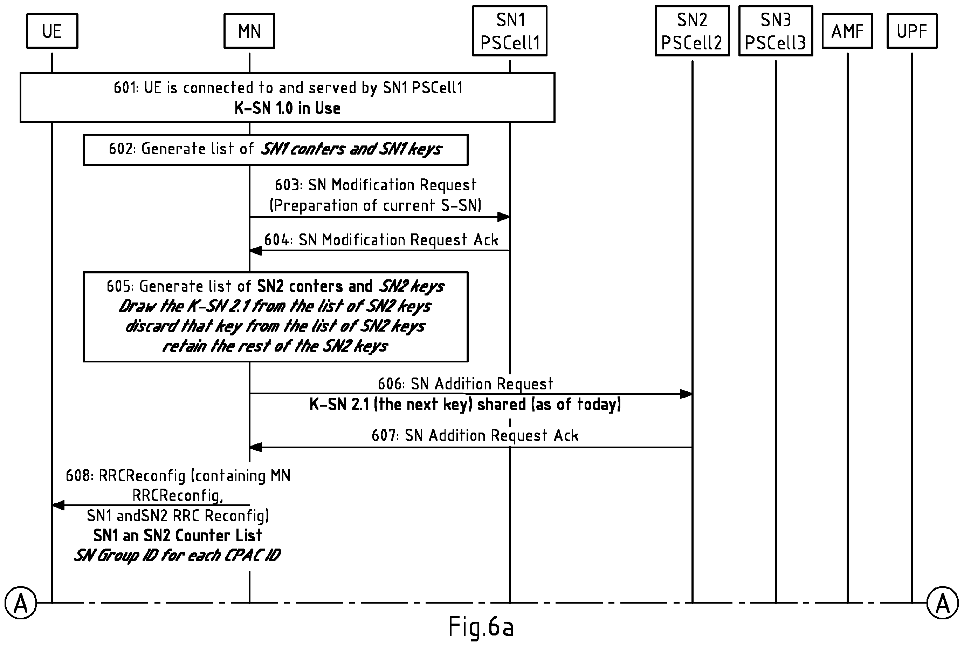

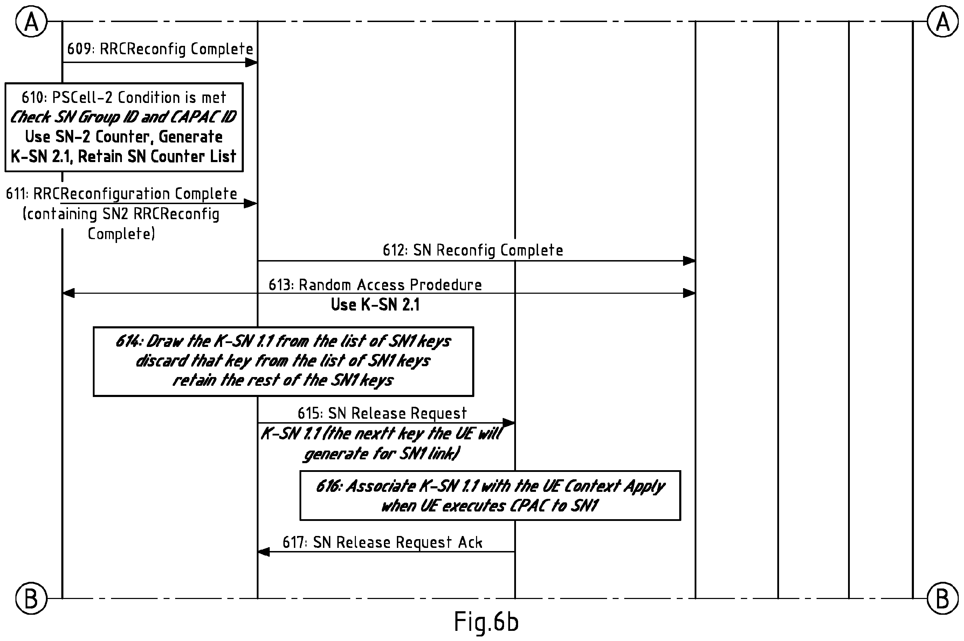

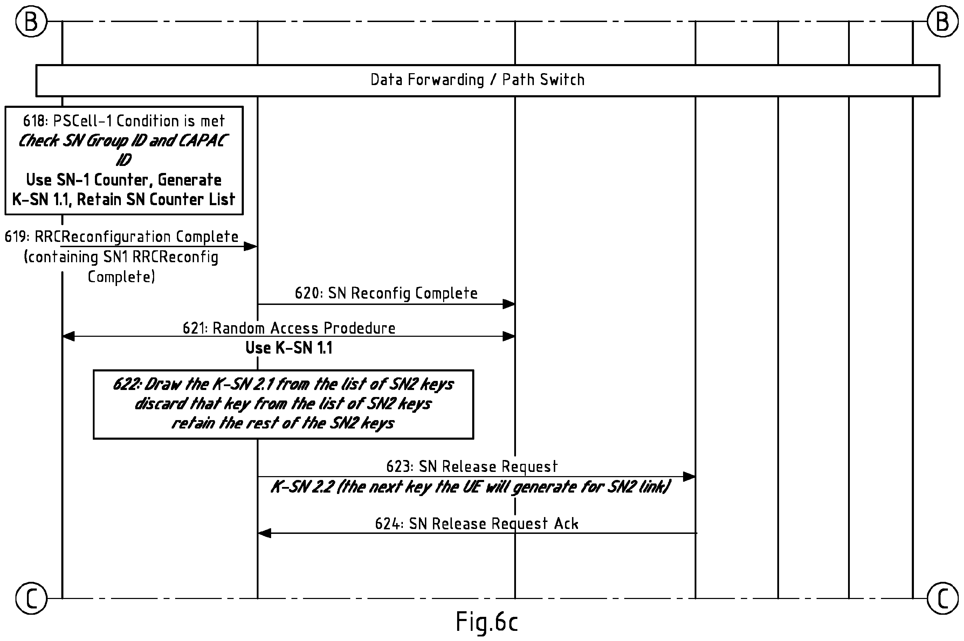

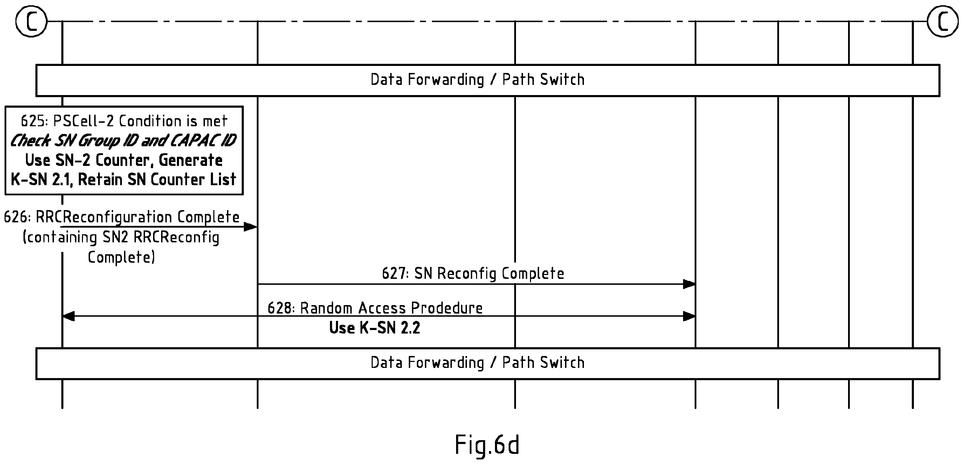

Fig. 6 shows a signaling diagram of another embodiment solution. The entities involved and their relation to the aspect is the same as described with respect to Fig. 4 and 5. Some signalings which are different than from Fig. 4 and 5 are described below, while some may be identical.

In signaling 2 and 5, the MN generates the SN1 and SN2 keys along with the SN1 and SN2 counters. MN will draw the first SN2 keys from the list of SN2 keys to be shared with the SN2. The MN shares this drawn key with the SN2 as of today. Hence the SN2 will know (e.g., only) the next key that the UE will use.

When the UE handover from SN1 to SN2, SN1 becomes a candidate for the CPAC (UE can now handover back to SN1). Therefore, in signaling 15, the MN informs the SN1 with the next SN1 key that the UE will use in case the UE handovers back to SN1. SN1 is in this case a candidate SN. Whether the UE will actually handover back to SN1 is not certain.

The MN may inform SN1 about the next SN1 key either via a SN Release Procedure (at the end of the previous communication session between the UE and SN1) or via Class-2 signaling that will for instance be a one-way signaling without ack message.

Alternatively, the next SN1 key may be provided from MN to SN1 in an SN-Addition-Request along with a K-SeNB and/or K-SgNB to be used for a first CPAC. The MN may provide (e.g., only) the next-key for the subsequent return. The next-key may be a key for future use by the UE in an access procedure at an unknown time to the SN1. This next-key is provisioned again with next value from the list when an SGNB-Reconfiguration-complete is sent for the first cell-change.

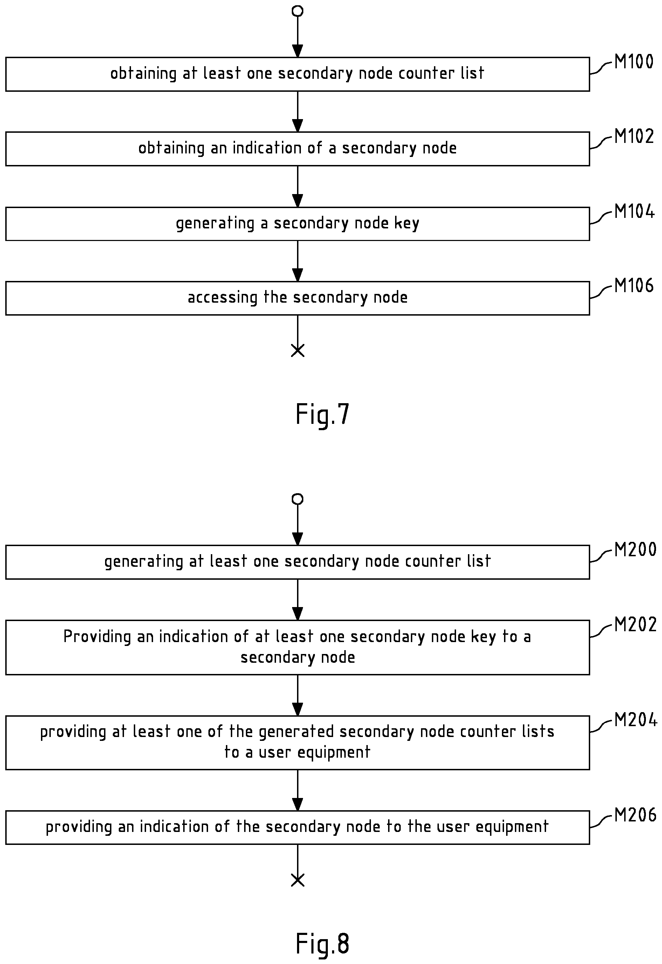

Fig. 7 is a flow chart illustrating a method according to the first example aspect. The method may be performed by a UE, e.g. in an existing communication session with a master node. In a first action M100, at least one secondary node counter list is obtained, e.g. from an MN performing a method according to the second example aspect. For instance, more than one NS counter lists may be obtained wherein the SN counter lists are associated to an individual SN respectively. The method further comprises, in action M102, obtaining an indication of an SN. For instance obtaining such an indication of a SN may enable the UE to identify an SN counter list to use for generating an SN key to access the SN indicated by the indication of a SN. In action M104, a secondary node key is generated. For instance, the generating involves selecting an SN counter list based on the obtained indication and may further comprise selecting an SN counter value from the selected SN counter list. The SN counter value may be entered (e.g., together with an SN counter length and/or a MN key) to a key generator, e.g., implemented as a piece of code in the memory of the apparatus performing the method. In action M106, the method further comprises accessing the secondary node indicated by the indication of a secondary node using the generated key. The secondary node may perform a method according to the third example aspect. The SN to be accessed is also provided with the correct SN key, for instance by one of the procedures outlined in Fig. 4 to 6.

Fig. 8 shows a flow chart illustrating the method according to the second example aspect. The method may be performed by a master node. In action M200, the method comprises generating at least one secondary node counter list. The SN counter list may be generated for a specific SN (e.g., performing a method according to the third example aspect) and may differ from an SN counter list generated for another SN (e.g., of the same cell group). In action M202, an indication of at least one SN key is provided to an SN. The SN key may correspond to an SN counter value comprised by the generated SN counter list. In action M204, at least one of the generated secondary node counter lists is provided to a UE (e.g., performing a method according to the first example aspect), for instance in an RRC signaling. The UE is thereby enabled to access an SN to which one of the SN counter lists corresponds. In action M206, an indication of an (e.g., of the) secondary node is provided to the user equipment, i.e., the UE, to which the at least one generated SN counter list has been provided in action M204.

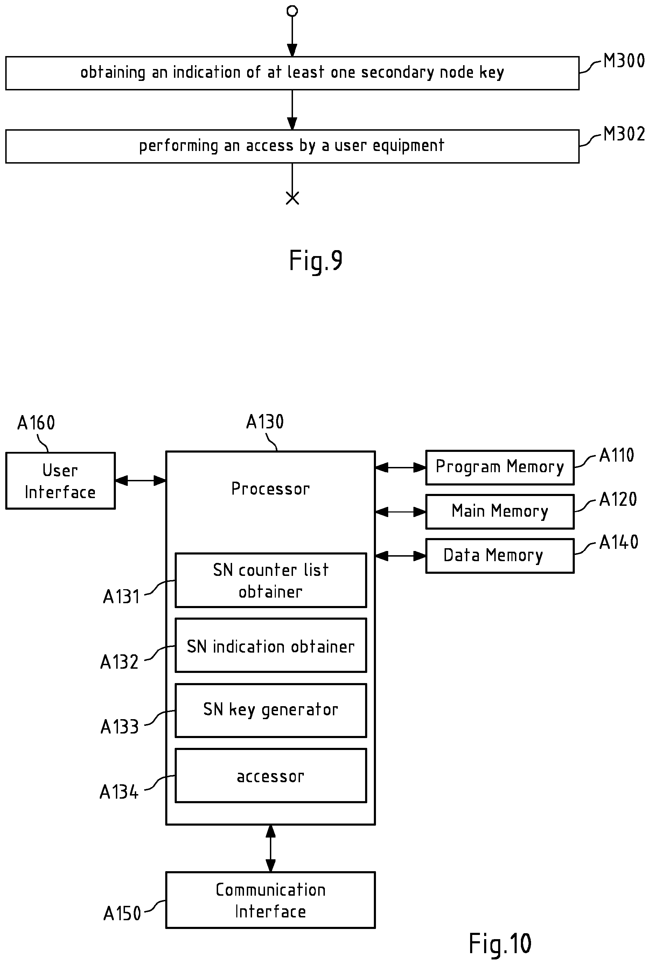

Fig. 9 shows a flowchart of the method according to the third example aspect, that may for instance be performed by a secondary node. In an action M300, at indication of at least one SN key may be obtained, e.g., from an MN (e.g., performing a method according to the second example aspect). The indication of at least one SN key may for instance comprise one (e.g., single) SN key or multiple SN keys, e.g., an SN key list. The method further comprises, in action M302, performing an access by a user equipment (e.g., performing a method according to the first example aspect). In other words, an SN performing the method shown may accept and/or respond to an access request by a UE, for instance as part of a random access procedure. The UE and/or the SN may use one of the SN keys provided by the MN to the SN in action M300 for the access and/or for subsequent communication.

Fig. 10 shows an example block diagram of a UE 100. The UE may perform a method according to the first example aspect. The UE comprises a user interface A160, a program memory A110, a main memory A120, and a data memory A140. Further, it comprises a processor A130. The apparatus 100 may further comprise functional units A131 to A134 which respectively correspond to the actions as shown in the flowchart of figure 7. The SN counter list obtainer A131 may for instance obtain at least one SN counter list from an MN (e.g., performing a method according to the second example aspect) and so on. The functional units A131 to A134 may for instance be connected to and/or control the communication interface A150 in order to obtain the respective pieces of information and/or to perform an access to an SN (accessor A134).

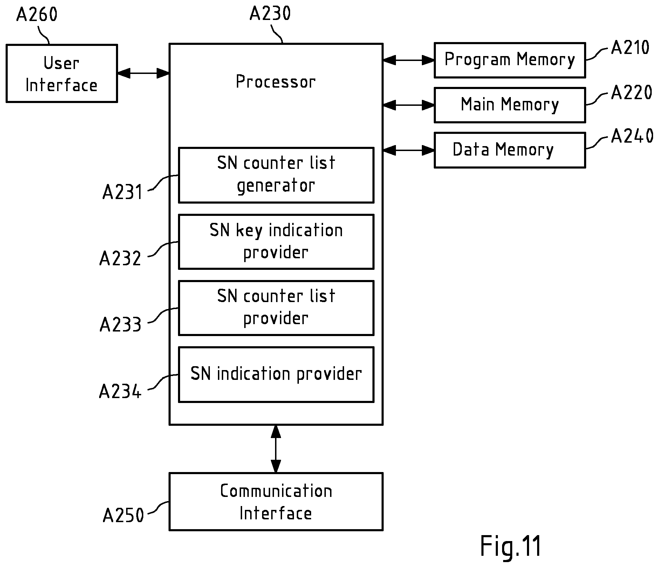

Fig. 11 shows an example block diagram of a master network node (MN). The MN may perform a method according to the second example aspect. The MN may comprise a user interface A260, a program memory A210, a main memory A220, and a data memory A240. Further, it comprises a processor A230. The network node 200 may further comprise functional units A231 to A234 which respectively correspond to the actions as shown in the flowchart of figure 8. The functional units A232-A234 may for instance work together with the communication interface A250.

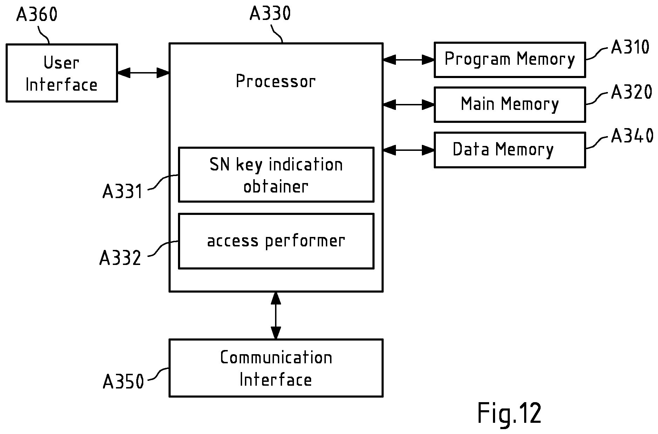

Fig. 12 shows an example block diagram of a secondary network node (SN). The SN may perform a method according to the third example aspect. The SN may comprise a user interface A360, a program memory A310, a main memory A320, and a data memory A340. Further, it comprises a processor A330. The network node 200 may further comprise functional units A331 and A332 which respectively correspond to the actions as shown in the flowchart of figure 9. The functional units A331 and A332 may for instance work together with the communication interface A350.

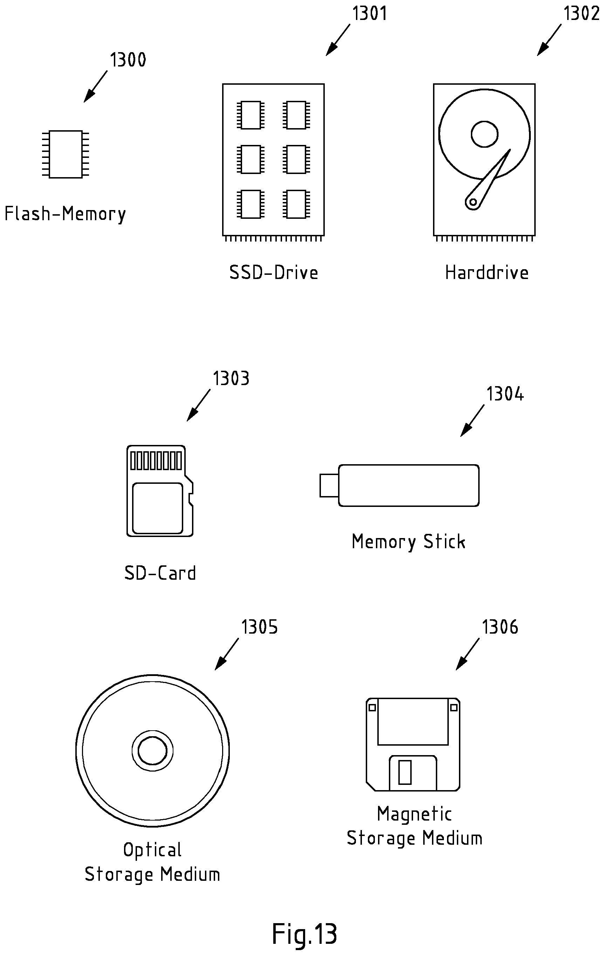

Fig. 13 is a schematic illustration of examples of tangible and non-transitory computer-readable storage media according to the present invention that may for instance be used to implement program and/or main memory A110, A120, A140, A210, A220, A240, A310, A320, A340 of the UE 100, the SN 200 or the MN of Fig. 7 to 9. Fig. 13 shows a flash memory 1300, which may for instance be soldered or bonded to a printed circuit board, a solid-state drive 1301 comprising a plurality of memory chips (e.g. Flash memory chips), a magnetic hard drive 1302, a Secure Digital (SD) card 1303, a Universal Serial Bus (USB) memory stick 1304, an optical storage medium 1305 (such as for instance a CD-ROM or DVD) and a magnetic storage medium 1306.

Some embodiments comprise:
Embodiment 1:
   A method, e.g., according to the first example aspect, comprising:
   - obtaining at least one secondary node counter list, wherein the secondary node counter list corresponds to mutually different secondary nodes of a plurality of secondary nodes,
   - obtaining an indication of a secondary node of the plurality of secondary nodes,
   - generating a secondary node key at least partially based on the at least one obtained secondary node counter list and the indication of the secondary node,
   - accessing the secondary node using the generated secondary node key.
Embodiment 2:
   The method according to any of embodiment 1, wherein
   - the at least one secondary node counter list comprises at least two secondary counter lists.
Embodiment 3:
   The method according to embodiment 1 or 2, wherein the method further comprises:
   - counting a number of accesses (e.g., of an apparatus performing and/or controlling the method) to a respective secondary node, wherein generating the secondary key is further based on the counted number of accesses.
Embodiment 4:
   The method according to any of embodiments 1 to 3, wherein at least one of
   - the secondary node counter list comprises a non-monotonic sequence of secondary node counter values, or
   - the secondary node counter list mutually differ from one another.
Embodiment 5:
   Method, e.g., according to the second example aspect, comprising:
   - generating at least one secondary node counter list, wherein the secondary node counter list corresponds to mutually different secondary nodes of a plurality of secondary nodes,
   - providing an indication of at least one secondary node key to a secondary node of the plurality of secondary nodes, wherein the at least one secondary node key of the indication of at least one secondary node key corresponds to a secondary node counter value comprised by the generated secondary node counter list corresponding to the secondary node of the plurality of secondary nodes,
   - providing at least one of the generated secondary node counter list to a user equipment, and
   - providing an indication of the secondary node of the plurality of secondary nodes to the user equipment.
Embodiment 6:
   The method according to embodiment 5, wherein
   - the at least one secondary node counter list comprises at least two secondary counter lists.
Embodiment 7:
   The method according to embodiment 5 or 6, wherein at least one of
   - providing the indication of at least one secondary node key before receiving an indication of an imminent access to the secondary node by the user equipment using the secondary node key indicated by the indication of at least one secondary node key
Embodiment 8:
   The method according to any of embodiments 5 to 7, wherein
   - the indication of at least one secondary node key corresponds to a secondary node key list corresponding to the generated secondary node counter list corresponding to the secondary network node, and
   - providing as part of at least one of
      - a secondary node modification request, or
      - a secondary node addition request.
Embodiment 9:
   The method according to any of embodiments 5 to 8, wherein
   - the indication of at least one secondary node key corresponds to a secondary node key for the access by the user equipment to the secondary network node and
   - providing as part of at least one of
      - a secondary node addition request or
      - a secondary node release request.
Embodiment 10:
   The method according to any of embodiments 5 to 9, wherein at least one of
   - providing the indication of at least one secondary node key after receiving an indication of an imminent access to the secondary node by the user equipment using the secondary node key of the indication of at least one secondary node key or
   - providing the indication of at least one secondary node key before receiving an indication of an imminent access to the secondary node by the user equipment using the secondary node key of the indication of at least one secondary node key, wherein at least one of
      - the indication of at least one secondary node key comprises the secondary node key for the access by the user equipment to the secondary network node or
      - providing as part of a secondary node reconfiguration complete message.
Embodiment 11:
   The method according to any of embodiments 5 to 10, wherein the method further comprises:
   - counting a number of accesses by a respective user equipment to a respective secondary node, wherein the indication of at least one secondary key is at least partially based on the counted number of accesses.
Embodiment 12:
   The method according to any of embodiments 5 to 11, wherein at least one of
   - the secondary node counter lists comprise a non-monotonic sequence of secondary node counter values respectively or
   - the secondary node counter lists mutually differ from one another.
Embodiment 13:
   Method, e.g., according to the third example aspect, comprising:
   - obtaining an indication of at least one secondary node key from a master node, wherein the at least one secondary node key corresponds to a secondary node counter value comprised by a generated secondary node counter list (e.g., corresponding to an apparatus performing and/or controlling the method),
   - performing an access of a user equipment using one of the at least one secondary node key of the obtained indication of at least one secondary node key.
Embodiment 14:
   The method according to embodiment 13, wherein at least one of
   - obtaining the indication of at least one secondary node key as part of a secondary node modification request or a secondary node addition request, or
   - obtaining the indication of at least one secondary node key as part of a secondary node modification request or a secondary node addition request, wherein the indication of at least one secondary node key corresponds to a secondary node key list corresponding to the generated secondary node counter list (e.g., corresponding to an apparatus performing and/or controlling the method).
Embodiment 15:
   The method according to embodiment 13 or 14, wherein at least one of
   - obtaining the indication of at least one secondary node key at least one of after a secondary node addition request or as part of a secondary node reconfiguration complete message, or
   - obtaining the indication of at least one secondary node key as part of a secondary node reconfiguration complete message, wherein the indication of at least one secondary node key corresponds to a secondary node key for an access by the user equipment (e.g., to an apparatus performing and/or controlling the method).
Embodiment 16:
   The method according to any of embodiments 13 to 15, wherein at least one of
   - obtaining the indication of at least one secondary node key as part of a secondary node addition request or a secondary node release request, or
   - obtaining the indication of at least one secondary node key as part of a secondary node addition request or a secondary node release request, wherein the indication of at least one secondary node key corresponds to a secondary node key for an access by the user equipment (e.g., to an apparatus performing and/or controlling the method).
Embodiment 17:
   The method according to any of embodiments 13 to 16, of any preceding claim wherein
   the means are further configured for:
   - counting a number of accesses by a respective user equipment (e.g., to an apparatus performing and/or controlling the method), and
   - selecting the secondary node key from the secondary node key list based on the counted number of accesses.
Embodiment 18:
   The method according to any of embodiments 13 to 17, wherein at least one of
   - the secondary node counter lists comprise a non-monotonic sequence of secondary node counter values respectively or
   - the secondary node counter lists mutually differ from one another.
Embodiment 19:
   A first apparatus, for instance a UE, comprising respective means for performing the method of any of Embodiments 1 to 4.
Embodiment 20:
   An first apparatus, for instance a UE, comprising at least one processor; and at least one memory storing instructions that, when executed by the at least one processor, cause the apparatus at least to perform and/or control the method according any of embodiments 1 to 4.
Embodiment 21:
   A second apparatus, for instance a (e.g., master) network node, comprising respective means for performing the method of any of embodiments 5 to 12.
Embodiment 22:
   A second apparatus, for instance a (e.g., master) network node, comprising at least one processor; and at least one memory storing instructions that, when executed by the at least one processor, cause the apparatus at least to perform and/or control the method according any of embodiments 5 to 12.
Embodiment 23:
   A third apparatus, for instance a (e.g., secondary) network node, comprising respective means for performing the method of any of embodiments 13 to 18.
Embodiment 24:
   A third apparatus, for instance a (e.g., secondary) network node, comprising at least one processor; and at least one memory storing instructions that, when executed by the at least one processor, cause the apparatus at least to perform and/or control the method according any of embodiments 13 to 18.
Embodiment 25:
   A computer program, the computer program when executed by a processor causing an apparatus, e.g. the apparatus according to embodiment 19 or 20, to perform and/or control the actions and/or steps of the method of any of embodiments 1 to 4.
Embodiment 26:
   A computer program product comprising a computer program according to embodiment 25.
Embodiment 25:
   A computer program, the computer program when executed by a processor causing an apparatus, e.g. the apparatus according to embodiment 21 or 22, to perform and/or control the actions and/or steps of the method of any of embodiments 5 to 12.
Embodiment 26:
   A computer program product comprising a computer program according to embodiment 25.
Embodiment 27:
   A computer program, the computer program when executed by a processor causing an apparatus, e.g. the apparatus according to embodiment 23 or 24, to perform and/or control the actions and/or steps of the method of any of embodiments 13 to 18.
Embodiment 28:
   A computer program product comprising a computer program according to embodiment 27
Embodiment 29:
   A system comprising:
   at least one first apparatus according to any of the embodiments 19 or 20,
   at least one second apparatus according to any of the embodiments 21 or 22, and
   at least one third apparatus according to any of the embodiments 23 or 24.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Having the same meaning as the expression "A and/or B", the expression "at least one of A or B" may be used herein. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are (e.g., only) examples, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of (e.g., only) one of the enumerated features is possible. The specific combination of all subsequently enumerated features may as well be considered. Also, a plurality of (e.g., only) one of the enumerated features may be possible.

The sequence of all method actions presented above is not mandatory, also alternative sequences may be possible. Nevertheless, the specific sequence of method actions exemplarily shown in the figures shall be considered as one possible sequence of method actions for the respective embodiment described by the respective figure.

The subject-matter has been described above by means of example embodiments. It should be noted that there are alternative ways and variations which are obvious to a skilled person in the art and can be implemented without deviating from the scope of the appended claims.

### List of abbreviations

- ACK: Positive Acknowledgement
- RRC: Radio Resource Control
- UE: User Equipment
- MN: Master Node
- SN: Secondary Node
- MR-DC: Multi-RAT dual connectivity
- PCell: Primary Cell
- PSCell: Primary and Secondary Cell
- SCell: Secondary Cell
- SCG: Secondary Cell Group
- MCG: Master Cell Group
- CPAC: Conditional PSCell Addition and Change

## Claims

1. Apparatus comprising means for:
- obtaining at least one secondary node counter list, wherein the secondary node counter list corresponds to mutually different secondary nodes of a plurality of secondary nodes,
- obtaining an indication of a secondary node of the plurality of secondary nodes,
- generating a secondary node key at least partially based on the at least one obtained secondary node counter list and the indication of the secondary node,
- accessing the secondary node using the generated secondary node key.

2. The apparatus according to claim 1, wherein
- the at least one secondary node counter list comprises at least two secondary counter lists.

3. The apparatus according to claim 1 or 2, wherein the means are further configured for:
- counting a number of accesses of the apparatus to a respective secondary node, wherein generating the secondary key is further based on the counted number of accesses.

4. The apparatus according to any of claims 1 to 3, wherein at least one of
- the secondary node counter list comprises a non-monotonic sequence of secondary node counter values, or
- the secondary node counter list mutually differ from one another.

5. Apparatus comprising means for:
- generating at least one secondary node counter list, wherein the secondary node counter list corresponds to mutually different secondary nodes of a plurality of secondary nodes,
- providing an indication of at least one secondary node key to a secondary node of the plurality of secondary nodes, wherein the at least one secondary node key of the indication of at least one secondary node key corresponds to a secondary node counter value comprised by the generated secondary node counter list corresponding to the secondary node of the plurality of secondary nodes,
- providing at least one of the generated secondary node counter list to a user equipment, and
- providing an indication of the secondary node of the plurality of secondary nodes to the user equipment.

6. The apparatus according to claim 5, wherein
- the at least one secondary node counter list comprises at least two secondary counter lists.

7. The apparatus according to claim 5 or 6, wherein at least one of
- providing the indication of at least one secondary node key before receiving an indication of an imminent access to the secondary node by the user equipment using the secondary node key indicated by the indication of at least one secondary node key

8. The apparatus according to any of claims 5 to 7, wherein
- the indication of at least one secondary node key corresponds to a secondary node key list corresponding to the generated secondary node counter list corresponding to the secondary network node, and
- providing as part of at least one of
- a secondary node modification request, or
- a secondary node addition request.

9. The apparatus according to any of claims 5 to 8, wherein
- the indication of at least one secondary node key corresponds to a secondary node key for the access by the user equipment to the secondary network node and
- providing as part of at least one of
- a secondary node addition request or
- a secondary node release request.

10. The apparatus according to any of claims 5 to 9, wherein at least one of
- providing the indication of at least one secondary node key after receiving an indication of an imminent access to the secondary node by the user equipment using the secondary node key of the indication of at least one secondary node key or
- providing the indication of at least one secondary node key before receiving an indication of an imminent access to the secondary node by the user equipment using the secondary node key of the indication of at least one secondary node key, wherein at least one of
- the indication of at least one secondary node key comprises the secondary node key for the access by the user equipment to the secondary network node or
- providing as part of a secondary node reconfiguration complete message.

11. The apparatus according to any of claims 5 to 10 wherein the means are further configured for:
- counting a number of accesses by a respective user equipment to a respective secondary node, wherein the indication of at least one secondary key is at least partially based on the counted number of accesses.

12. The apparatus according to any of claims 5 to 11, wherein at least one of
- the secondary node counter lists comprise a non-monotonic sequence of secondary node counter values respectively or
- the secondary node counter lists mutually differ from one another.

13. Apparatus comprising means for:
- obtaining an indication of at least one secondary node key from a master node, wherein the at least one secondary node key corresponds to a secondary node counter value comprised by a generated secondary node counter list corresponding to the apparatus,
- performing an access of a user equipment using one of the at least one secondary node key of the obtained indication of at least one secondary node key.

14. The apparatus according to claim 13, wherein at least one of
- obtaining the indication of at least one secondary node key as part of a secondary node modification request or a secondary node addition request, or
- obtaining the indication of at least one secondary node key as part of a secondary node modification request or a secondary node addition request, wherein the indication of at least one secondary node key corresponds to a secondary node key list corresponding to the generated secondary node counter list corresponding to the apparatus.

15. The apparatus according to claim 13 or 14, wherein at least one of
- obtaining the indication of at least one secondary node key at least one of after a secondary node addition request or as part of a secondary node reconfiguration complete message, or
- obtaining the indication of at least one secondary node key as part of a secondary node reconfiguration complete message, wherein the indication of at least one secondary node key corresponds to a secondary node key for an access by the user equipment to the apparatus.
